# FASCICULE DE BREVET EUROPEEN

(11) **EP 1 094 581 B1**
(45) Date de publication et mention de la délivrance du brevet: **18.05.2011**
(21) Numéro de dépôt: 00402802.3
(22) Date de dépôt: 11.10.2000
(51) Int. Cl.: H02G 3/04, H02G 3/06, H02G 3/12

(54) **Accessoire de passage pour goulotte**
Durchführungszubehör für Kabelkanal
Passage accessory for channel

(30) Priorité: 18.10.1999 FR 9912963
(43) Date de publication de la demande: 25.04.2001
(73) Titulaire: Legrand France, 87000 Limoges (FR); Legrand SNC, 87000 Limoges (FR)
(72) Inventeur: Decore, Raphaël, 72140 Parennes (FR); Decore, Bertrand, 72650 La Chapelle Saint Aubin (FR)
(74) Mandataire: Santarelli

(56) Documents cités:
- DE-A- 2 852 483
- FR-A- 2 280 849
- GB-A- 2 254 966

## Description

La présente invention concerne d'une manière générale les goulottes du type de celles mises en oeuvre, par exemple, pour le support, le logement et la protection de divers appareillages, et, en particulier, de divers appareillages électriques, aussi bien que pour le support, le logement et la protection des câbles, conducteurs, canalisations ou autres équipements nécessaires à la desserte de ces appareillages.

Ainsi qu'on le sait, une goulotte présente, par définition, un socle, de section transversale ouverte, par lequel se fait sa fixation à une quelconque paroi, ou à un quelconque autre support, et un couvercle, qui, pour la fermeture de ce socle, est à rapporter de manière amovible sur celui-ci, par exemple par encliquetage.

L'invention vise plus particulièrement le cas où le volume intérieur de la goulotte, ou, plus exactement, celui de son socle, auquel cependant le précédent sera ici systématiquement assimilé pour plus de simplicité, est fragmenté, transversalement, en au moins deux compartiments, qui courent longitudinalement, parallèlement l'un à l'autre, et, par exemple, côte à côte, et qui sont séparés l'un de l'autre par au moins une cloison, dite ici cloison de compartimentage.

L'un de ces compartiments, dit ici compartiment d'installation, est dévolu à l'implantation des appareillages, tandis que l'autre, dit ici compartiment de câblage, est dévolu à celle des câbles ou des conducteurs, en étant éventuellement lui-même fragmenté en deux ou plusieurs sous-compartiments lorsque, véhiculant des courants de tensions différentes, ces câbles ou conducteurs doivent eux-mêmes être préférentiellement séparés les uns des autres.

Grâce à une telle disposition, il est avantageusement possible d'intervenir indifféremment sur l'un des compartiments, sans nécessairement intervenir sur l'autre de ceux-ci.

En outre, pour chacun des compartiments, la hauteur, ou profondeur, est totalement disponible pour les appareillages ou pour les câbles ou conducteurs concernés, sans interférence entre ces appareillages ou ces câbles ou conducteurs.

En particulier, s'agissant du compartiment d'installation, le volume intérieur est totalement disponible pour les appareillages, sans avoir à faire circuler des câbles ou conducteurs en dessous ou à côté de ceux-ci, ce qui, pour ce qui concerne par exemple la hauteur, permet, les autres conditions étant égales par ailleurs, de minimiser au mieux la hauteur de l'ensemble.

Mais un problème se pose, pour le passage des câbles ou conducteurs du compartiment de câblage au compartiment d'installation, lorsqu'est nécessaire le raccordement d'un appareillage à de tels câbles ou conducteurs.

Dans le brevet français déposé le 11 mai 1994 sous le n° 94 05842 et publié sous le n° 2 719 887, la cloison de compartimentage alors à franchir appartient au socle de la goulotte, en venant d'un seul tenant du fond de ce socle.

Il est donc nécessaire de prévoir de place en place des évidements le long de cette cloison de compartimentage, en l'espèce des échancrures débouchant sur son bord libre.

Concernant un profilé réalisé par extrusion, la formation systématique de telles échancrures ne manquent pas d'en rendre plus complexe, la fabrication, et, partant, de renchérir celle-ci.

En outre, lors d'une installation, ces échancrures n'interviennent pas nécessairement aux endroits souhaités par l'installateur.

Il en est sensiblement de même dans le brevet français déposé le 23 mars 1990 sous le n° 90 03772 et publié sous le n° 2 660 120, dans lequel, cependant, la cloison de compartimentage affectée des évidements ou échancrures nécessaires forme une pièce qui, distincte du socle de la goulotte, est rapportée de manière amovible sur le fond de ce socle.

Dans le certificat d'addition français déposé le 30 juillet 1974 sous le n° 74 26398 et publié sous le n° 2 280 849, la cloison de compartimentage appartient au couvercle d'un compartiment de la goulotte, en venant en partie d'un seul tenant de ce couvercle, et cela est le cas également dans d'autres réalisations.

Mais, comme précédemment, il est nécessaire de prévoir par avance, de place en place, dans cette cloison de compartimentage, ou de ménager par découpe à la demande dans celle-ci, des évidements propres au passage de câbles ou de conducteurs, avec les inconvénients que cela implique.

La présente invention a d'une manière générale pour objet une disposition permettant d'éviter de manière particulièrement simple ces inconvénients et conduisant en outre à d'autres avantages.

De manière plus précise, elle a tout d'abord pour objet un accessoire de passage pour goulotte comportant un socle adapté à être appliqué à une quelconque paroi ou à un quelconque autre support, le volume intérieur de la goulotte étant fragmenté en au moins deux compartiments séparés l'un de l'autre par au moins une cloison de compartimentage appartenant au couvercle associé à un premier de ces compartiments, cet accessoire de passage étant caractérisé en ce que, destiné à venir localement en substitution au couvercle auquel appartient la cloison de compartimentage, il comporte, d'une part, au moins une paroi longitudinale, par laquelle il est apte à se substituer à cette cloison de compartimentage, et qui est ajourée par au moins un passage, et, d'autre part, des moyens d'engagement, qui s'étendent eux aussi longitudinalement, et par lesquels il est apte à être solidarisé au socle de la goulotte, par exemple par encliquetage.

Ainsi, suivant l'invention, le parti est pris de mettre systématiquement en oeuvre, pour l'obtention du passage recherché, un accessoire spécifique présentant un tel passage.

Il suffit, dès lors, de fragmenter en deux tronçons le couvercle du compartiment concerné, et d'insérer l'accessoire de passage entre ces deux tronçons.

Ainsi, le passage recherché est obtenu sans qu'il soit nécessaire que la cloison de compartimentage du couvercle en cause présente de quelconques évidements, et sans qu'il soit nécessaire de procéder à une quelconque découpe de cette cloison de compartimentage en l'absence de tels évidements.

En effet, du fait même du tronçonnage de ce couvercle, cette cloison de compartimentage se trouve localement éliminée, et l'accessoire de passage suivant l'invention, qui présente le passage recherché, vient simplement se substituer à elle.

Si désiré, la fonction de l'accessoire de passage suivant l'invention peut se borner à la présence du passage recherché.

Mais, suivant un développement préférentiel de l'invention, cet accessoire de passage est également apte à recevoir un appareillage, à la manière d'un quelconque support.

Il en est ainsi avantageusement tiré un parti supplémentaire, au bénéfice d'une simplicité accrue de l'installation à réaliser.

Dans tous les cas, l'accessoire de passage suivant l'invention est en outre préférentiellement apte à recevoir par encliquetage une plaque de recouvrement, formant cache.

Ainsi, il est avantageusement possible de se satisfaire d'une coupe approximative des tronçons du couvercle entre lesquels on place cet accessoire de passage.

Les caractéristiques et avantages de l'invention ressortiront d'ailleurs de la description qui va suivre, à titre d'exemple, en référence aux dessins schématiques annexés sur lesquels :
- la figure 1 est une vue en perspective d'une goulotte équipée d'un accessoire de passage suivant l'invention ;
- la figure 2 en est, à échelle supérieure, une vue en coupe transversale, passant à l'écart de cet accessoire de passage, suivant la ligne II-II de la figure 1 ;
- la figure 3 en est, à la même échelle que la figure 2, une autre vue en coupe transversale, passant par l'accessoire de passage, suivant la ligne III-III de la figure 1 ;
- la figure 4 en est, à échelle réduite, une vue en perspective éclatée;
- la figure 5 est une vue en perspective de l'accessoire de passage suivant l'invention, représenté isolément, et vu de dessus ;
- la figure 6 est une autre vue en perspective de cet accessoire de passage, vu de dessous ;
- la figure 7 en est, à échelle supérieure, une vue partielle en coupe transversale, suivant la ligne VII-VII de la figure 5 ;
- la figure 8 est, à échelle différente, une vue en perspective d'une plaque de recouvrement associée à l'accessoire de passage suivant l'invention, vue de dessous ;
- la figure 9 est, à échelle supérieure, une vue partielle en coupe longitudinale de cette plaque de recouvrement, suivant la ligne IX-IX de la figure 8 ;
- la figure 10 est une vue en coupe transversale analogue à celle de la figure 3, pour une autre forme de réalisation de la goulotte et de l'accessoire de passage suivant l'invention.

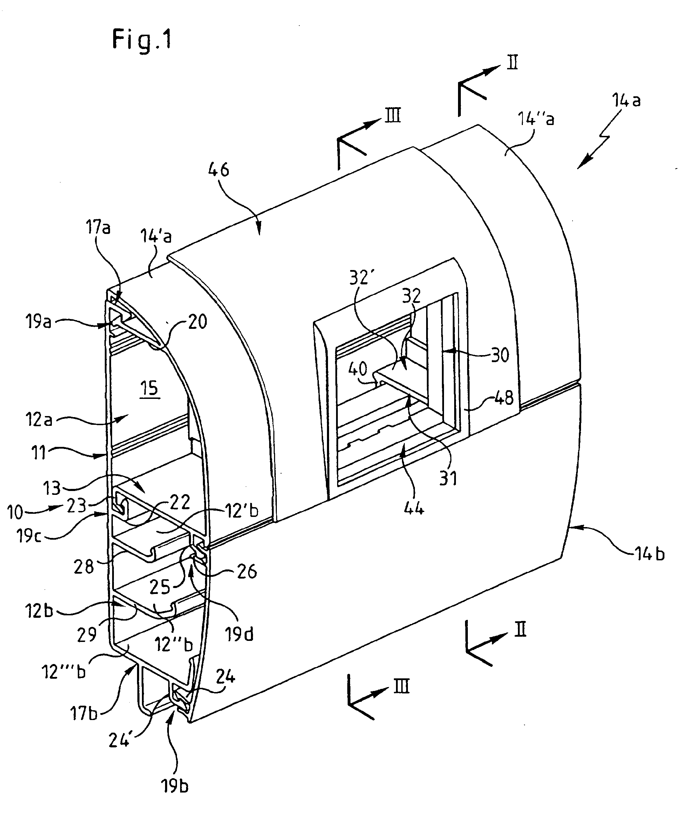

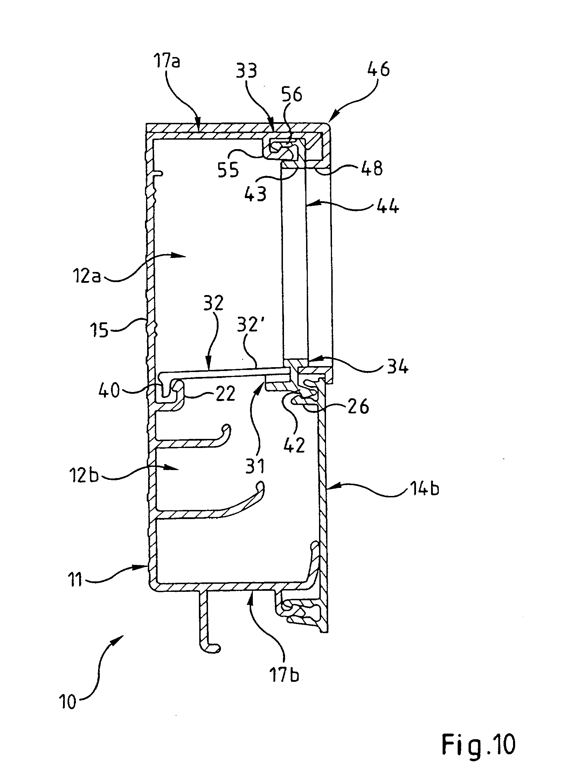

Sur les figures 1 à 4, et sur la figure 10, on reconnaît, sous la référence générale 10, une goulotte comportant, de manière connue en soi, d'une part un socle 11, dont le volume intérieur est fragmenté en au moins deux compartiments 12A, 12B par au moins une cloison de compartimentage 13, et, d'autre part, deux couvercles 14A, 14B, qui sont associés, chacun respectivement, à ces deux compartiments 12A, 12B, et à l'un desquels appartient la cloison de compartimentage 13 correspondante.

De manière également connue en soi, le socle 11 comporte un fond 15 plat, par lequel il est destiné à être appliqué à une quelconque paroi ou à un quelconque autre support, non représenté.

Il comporte, en outre, le long des bords longitudinaux de ce fond 15, sensiblement perpendiculairement à celui-ci, deux ailes latérales 17A, 17B.

Dans la forme de réalisation plus particulièrement représentée sur les figures 1 à 4, ces ailes latérales 17A, 17B sont de hauteurs très différentes.

Par exemple, et tel que représenté, l'aile latérale 17A, qui est celle destinée à s'étendre le long du bord longitudinal supérieur du fond 15 lorsque la goulotte 10 est installée en plinthe au bas d'un mur, a une hauteur très largement inférieure à celle de l'aile latérale 17B opposée.

Dans les formes de réalisation représentées, les deux compartiments 12A, 12B des socles 11 sont contigus, et seule intervient entre eux une cloison de compartimentage 13.

Le premier de ces compartiments 12A, 12B, en l'espèce le compartiment 12B supérieur, est normalement dévolu à l'implantation de quelconques appareillages, et, en particulier, de quelconques appareillages électriques, non représentés.

Il sera donc dans ce qui suit indifféremment appelé tantôt "premier compartiment 12A", tantôt "compartiment 12A supérieur" et tantôt "compartiment d'installation 12A".

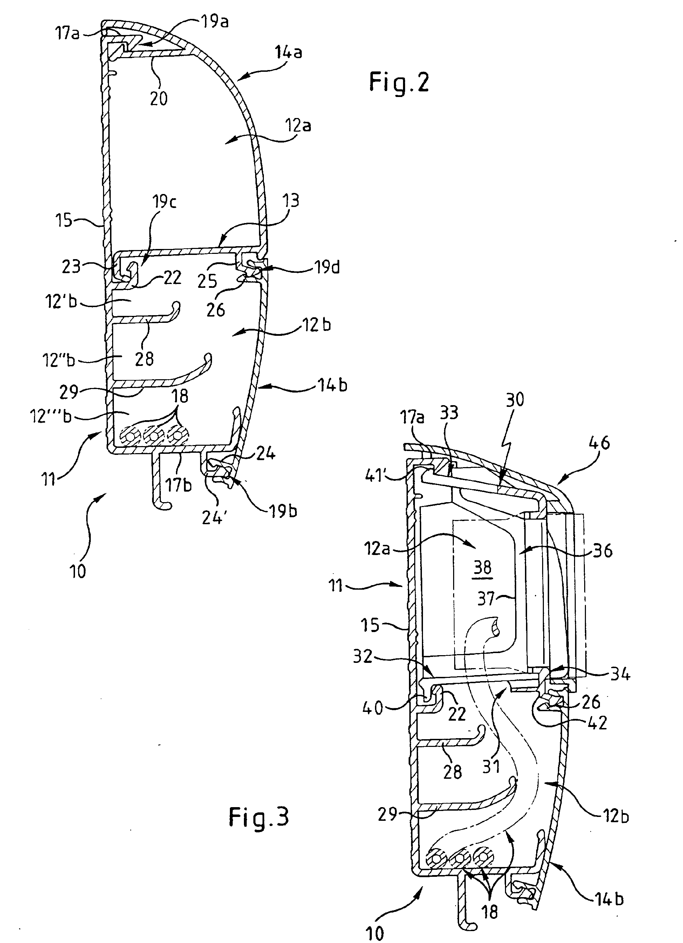

Le deuxième compartiment, en l'espèce le compartiment 12B inférieur, est, lui, normalement dévolu à l'implantation de câbles ou de conducteurs électriques 18, tel que schématisé en traits interrompus sur les figures 2 et 3.

Il sera donc indifféremment appelé dans ce qui suit tantôt "deuxième compartiment 12B", tantôt "compartiment 12B inférieur" et tantôt "compartiment de câblage 12B".

Dans les formes de réalisation représentées, la cloison de compartimentage 13 appartient au couvercle 14A associé au premier compartiment 12A.

Du fait de la hauteur réduite de l'aile latérale 17A du socle 11 dans la forme de réalisation représentée sur les figures 1 à 4, ce couvercle 14A est très largement cintré.

Pour son maintien, il est prévu, entre le socle 11 et lui, des moyens d'encliquetage 19A, 19C.

Les moyens d'encliquetage 19A interviennent entre l'aile latérale 17A du socle 11 et une languette 20 prévue à cet effet en saillie sur la surface intérieure du couvercle 14A, figures 1 et 2.

Les moyens d'encliquetage 19C interviennent, eux, entre une console 22 prévue à cet effet en saillie sur le fond 15 du socle 11 et la cloison de compartimentage 13, celle-ci présentant en correspondance à cet effet un retour 23.

Le couvercle 14B associé au deuxième compartiment 12B n'est, lui, que faiblement cintré dans la forme de réalisation représentée sur les figures 1 à 15.

Son maintien se fait à la faveur de moyens d'encliquetage 19B, 19D.

Les moyens d'encliquetage 19B interviennent entre l'aile latérale 17B du socle 11 et une languette 24 que le couvercle 14B présente en saillie à cet effet sur sa surface intérieure, l'aile latérale 17B du socle 11 présentant elle-même en correspondance une console 24' en saillie sur sa surface extérieure, figures 1 et 2.

Les moyens d'encliquetage 19D interviennent, eux, entre la cloison de compartimentage 13 appartenant au couvercle 14A associé au premier compartiment 12A, cette cloison de compartimentage 13 comportant à cet effet une console 25 parallèlement à son contour 23 précédent, et une autre languette 26 que le couvercle 14B présente à cet effet en saillie sur sa surface intérieure, parallèlement à sa languette 24 précédente, figures 1 et 2.

Dans les formes de réalisation représentées, enfin, le deuxième compartiment 12B, ou compartiment de câblage, est lui-même subdivisé en sous-compartiments 12'B, 12"B, 12"'B par des cloisons 28, 29, qui, venues d'un seul tenant du fond 15 du socle 11, s'étendent parallèlement l'une à l'autre, à distance l'une de l'autre, et dont les hauteurs, toutes inférieures à la hauteur de l'aile latérale 17B correspondante du socle 11, sont elles-mêmes différentes l'une de l'autre, la hauteur de la cloison 28 la plus éloignée de l'aile latérale 17B étant inférieure à la hauteur de la cloison 29 la plus proche de celle-ci.

Les dispositions qui précèdent étant bien connues par elles-mêmes et/ou ne relevant pas de la présente invention, elles ne sont pas décrites plus en détail ici.

Seuls seront décrits dans ce qui suit les éléments nécessaires à la compréhension de l'invention.

Suivant l'invention, pour l'établissement d'un passage entre les deux compartiments 12A, 12B de la goulotte 10, on insère, transversalement, dans le compartiment auquel appartient la cloison de compartimentage 13, en l'espèce le premier compartiment 12A, entre deux tronçons successifs 14'A, 14"A du couvercle 14A de celui-ci, un accessoire spécifique 30, dit ici par simple commodité accessoire de passage, présentant le passage 31 recherché.

Ainsi destiné à venir localement en substitution au couvercle 14A auquel appartient la cloison de compartimentage 13, l'accessoire de passage 30 suivant l'invention comporte, globalement, dans les formes de réalisation représentées, d'une part, au moins une paroi longitudinale 32, par laquelle il est apte à se substituer à cette cloison de compartimentage 13, et qui est ajourée par au moins un passage, en l'espèce le passage 31 recherché, et, d'autre part, suivant des modalités décrites plus en détail ultérieurement, des moyens d'engagement 33, qui s'étendent, eux aussi, longitudinalement, parallèlement à la cloison de compartimentage 13, et par lesquels il est apte à être solidarisé au socle 11 de la goulotte 10.

Dans les formes de réalisation représentées, l'accessoire de passage 30 suivant l'invention comporte, en outre, d'une part, une paroi de façade 34, qui, à son raccordement avec la paroi longitudinale 32, forme globalement un dièdre avec celle-ci, et, d'autre part, à distance l'une de l'autre, et parallèlement l'une à l'autre, deux parois transversales 36.

La paroi de façade 34 est à l'image du couvercle 14A concerné.

Dans la forme de réalisation plus particulièrement représentée sur les figures 1 à 4, elle est donc globalement cintrée, comme celui-ci.

Les parois transversales 36 ont, elles, corollairement, un contour qui correspond sensiblement au profil transversal du compartiment 12A concerné, c'est-à-dire le compartiment 12A dans lequel l'accessoire de passage 30 doit être inséré.

Préférentiellement, l'une, au moins, de ces parois transversales 36, présente, elle-même, au moins un passage 37.

Par exemple, et tel que représenté, il en est ainsi pour l'une et l'autre des deux parois transversales 36.

Dans les formes de réalisation représentées, le passage 37 de ces parois transversales 36 est occulté par un opercule défonçable 38.

Dans les formes de réalisation représentées, le passage 31 de la paroi longitudinale 32 ouvre sur le bord libre de celle-ci, c'est-à-dire sur le bord de cette paroi longitudinale 32 opposée à la paroi de façade 34.

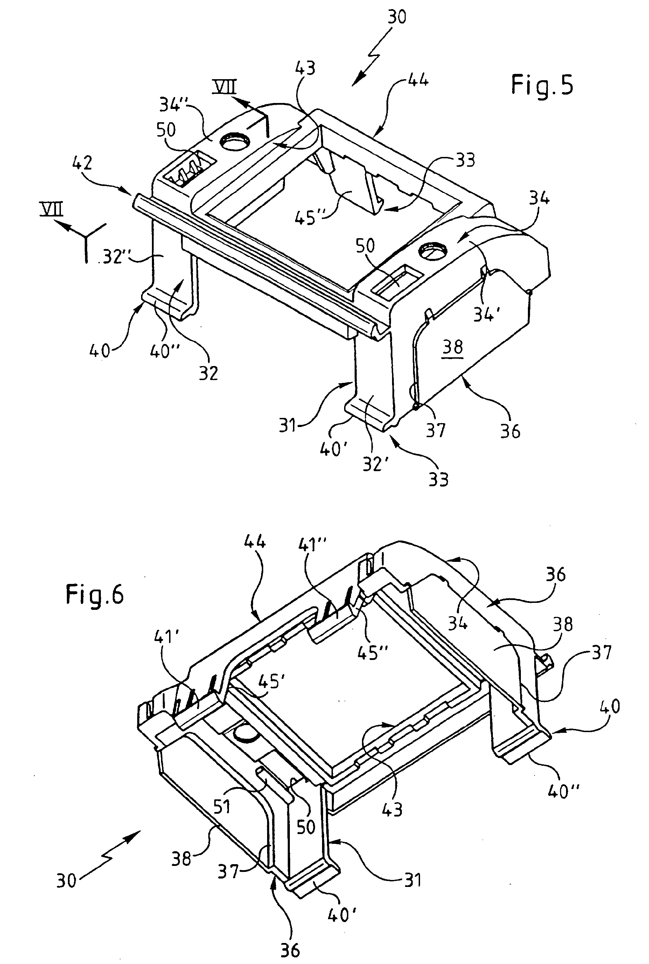

La paroi longitudinale 32 se réduit, de ce fait, à deux piétements 32', 32", qui, écartés l'un de l'autre, jouxtent, chacun respectivement, les deux parois transversales 36, figure 5.

Par exemple, et tel que représenté, le dièdre que la paroi de façade 34 fait avec cette paroi longitudinale 32 est sensiblement droit.

Dans les formes de réalisation représentées, les moyens d'engagement 33 prévus pour la solidarisation de l'accessoire de passage 30 au socle 11 de la goulotte 10 comportent au moins une languette 40, qui, disposée du côté de la paroi longitudinale 32, fait saillie par rapport à celle-ci.

Destinée à coopérer en engagement avec la console 22 du socle 11, au lieu et place du retour 23 de la cloison de compartimentage 13, cette languette 40 fait en pratique saillie au dos de la paroi longitudinale 32, le long du bord libre de celle-ci.

En pratique, les moyens d'engagement 33 prévus pour la solidarisation de l'accessoire de passage 30 au socle 11 de la goulotte 10 interviennent au moins pour partie par encliquetage.

Cependant, dans les formes de réalisations représentées, la languette 40 de l'accessoire de passage 30 est simplement destinée à venir se prendre sous la console 22 du socle 11.

Elle est donc sensiblement rectiligne et plane.

En pratique, du fait du passage 31, cette languette 40 est fractionnée en deux tronçons de languettes 40', 40", à raison d'un par piétement 32', 32" de la paroi longitudinale 32.

Dans les formes de réalisation représentées, les moyens d'engagement 33 prévus pour la solidarisation de l'accessoire de passage 30 au socle 11 de la goulotte 10 comportent, également, au moins un crochet 41', 41", qui, disposé à distance de la paroi longitudinale 32, s'étend en direction opposée à celle-ci.

En pratique, deux crochets 41', 41" sont prévus, à distance l'un de l'autre, et en alignement l'un avec l'autre, sensiblement en correspondance, chacun respectivement, avec les deux tronçons de languette 40', 40" précédents.

En pratique, également, destinés à coopérer, en encliquetage, avec l'aile latérale 17A du socle 11, au lieu et place de la languette 20 du couvercle 14A, ces deux crochets 41', 41" interviennent du côté de l'extrémité de la paroi de façade 34 opposée à la paroi longitudinale 32.

Préférentiellement, et c'est le cas dans les formes de réalisation représentées, l'accessoire de passage 30 suivant l'invention est apte à recevoir par encliquetage le couvercle 14B associé au deuxième compartiment 12B de la goulotte 10.

Il comporte, donc, en saillie au dos de sa paroi longitudinale 32, au voisinage de sa paroi de façade 34, une console 42, qui, destinée à intervenir au lieu et place de la console 25 de la cloison de compartimentage 13 du couvercle 14A associé au premier compartiment 12A, a une configuration sensiblement analogue à celle de cette console 25.

Cette console 42 de l'accessoire de passage 30 est donc adaptée à coopérer en encliquetage avec la languette 26 du couvercle 14B associé au deuxième compartiment 12B.

Préférentiellement, et cela est également le cas dans les formes de réalisation représentées, l'accessoire de passage 30 suivant l'invention est apte à recevoir un appareillage, à la manière d'un quelconque support.

Pour ce faire, sa paroi de façade 34 est ajourée par un évidemment 43 à la faveur duquel intervient un cadre 44 destiné à s'étendre sensiblement parallèlement au fond 15 du socle 11 de la goulotte 10.

De ce fait, la paroi de façade 34 se réduit, pour l'essentiel, à deux traverses 34', 34" qui, chacune respectivement, s'étendent sensiblement en continuité avec les deux piétements 32', 32" de la paroi longitudinale 32, figure 5.

Du côté opposé à la paroi longitudinale 32, le cadre 44 déborde légèrement de la paroi de façade 34, en faisant donc saillie par rapport à celle-ci, et, le long de son bord correspondant, s'étendent, localement, à partir de lui, deux pattes élastiquement déformables 45', 45" auxquelles appartiennent chacun respectivement les deux crochets 41', 41".

Préférentiellement, enfin, et cela est également le cas dans les formes de réalisation représentées, l'accessoire de passage 30 suivant l'invention, est apte à recevoir par encliquetage une plaque de recouvrement 46.

Destinée à se substituer, localement, au couvercle 14A du premier compartiment 12A, en recouvrant les deux tronçons 14'A, 14"A de celui-ci à ses extrémités, cette plaque de recouvrement 46 est globalement cintrée, à l'image de ce couvercle 14A.

Au droit du cadre 44 de l'accessoire de passage 30, elle est conformée de manière à pouvoir recouvrir ce cadre 44, et, pour laisser un libre accès à celui-ci, elle présente un évidement 48.

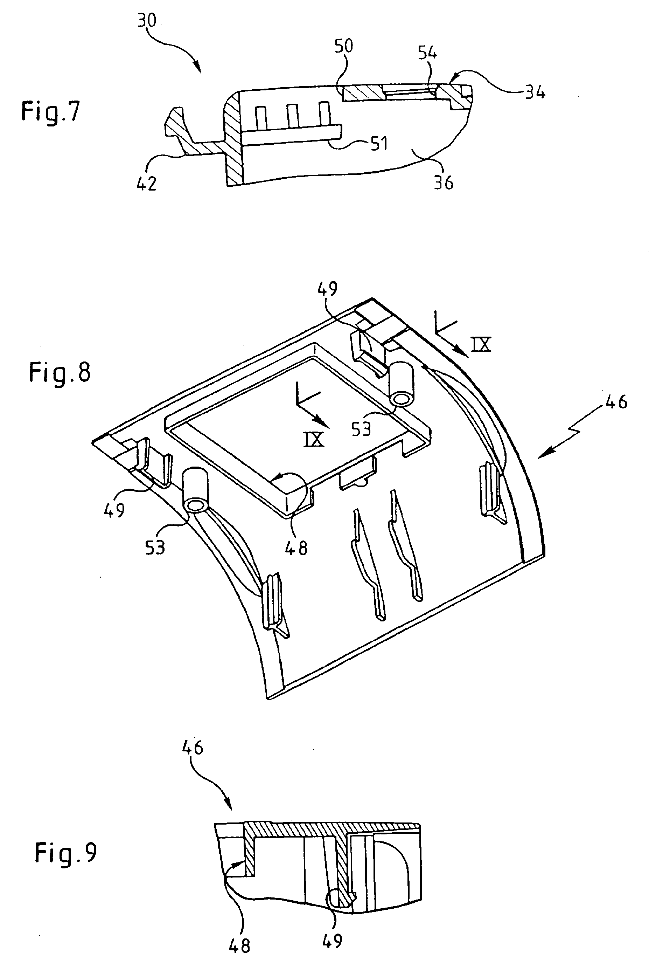

De part et d'autre de cet évidement 48, la plaque de recouvrement 46 présente, en saillie sur sa surface intérieure, figure 8, deux pattes d'encliquetage 49, par lesquelles, après engagement dans des ouvertures 50 prévues en correspondance à cet effet sur la paroi de façade 34 de l'accessoire de passage 30, elle est apte à venir en prise avec des crans 51 également prévus en correspondance à cet effet en saillie sur les parois transversales 36 de cet accessoire de passage 30.

Dans les formes de réalisation représentées, la plaque de recouvrement 46 présente, aussi, en saillie sur sa surface intérieure, deux piliers 53 par lesquels elles est apte à coopérer, en positionnement, et en centrage, avec deux perçages 54 prévus en correspondance à cet effet sur la paroi de façade 34 de l'accessoire de passage 30.

Pour la mise en oeuvre de l'accessoire de passage 30 suivant l'invention, il peut, par exemple, être procédé comme suit.

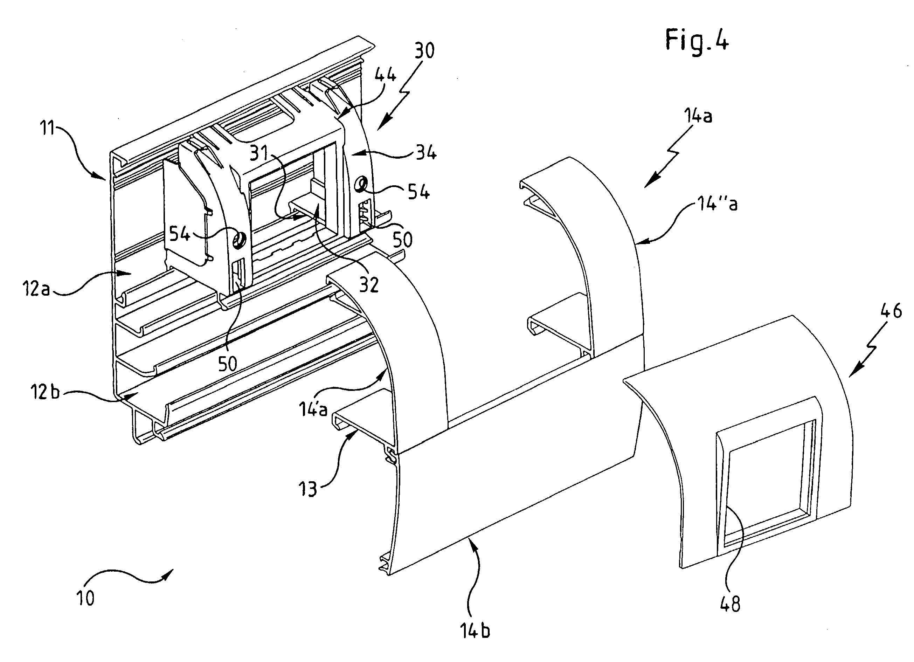

Dans un premier temps, et tel que présenté sur la figure 4, cet accessoire de passage 30 est encliqueté dans le premier compartiment 12A de la goulotte 10.

Le ou les câbles ou conducteurs 18 nécessaires au câblage de l'appareillage correspondant sont ensuite extraits du deuxième compartiment 12B de cette goulotte 10 pour être engagés dans l'accessoire de passage 30 à la faveur du passage 31 que comporte précisément à cet effet celui-ci.

Une fois ce câblage effectué, l'appareillage concerné est rapporté sur l'accessoire de passage 30, à la faveur de son cadre 44.

Il suffit, ensuite, de fermer le premier compartiment 12A de part et d'autre de l'accessoire de passage 30, par les tronçons de couvercle 14'A, 14"A du couvercle 14A correspondant, de fermer le deuxième compartiment 12B par le couvercle 14B, et de rapporter sur l'accessoire de passage 30 la plaque de recouvrement 46 qui lui est associée.

Ainsi, suivant l'invention, la goulotte 10 comporte, alors, dans le compartiment 12A au couvercle 14A duquel appartient la cloison de compartimentage 13, un accessoire de passage 30, qui est inséré entre deux tronçons 14'A, 14"A successifs de ce couvercle 14A, et qui présente un passage 31 faisant communiquer l'un avec l'autre ses deux compartiments 12A, 12B.

Suivant la variante de réalisation représentée sur la figure 10, les deux ailes latérales 17A, 17B du socle 11 de la goulotte 10 ont des hauteurs sensiblement égales l'une à l'autre.

Par suite, la paroi de façade 34 de l'accessoire de passage 30 suivant l'invention est sensiblement droite, et, lorsque celui-ci est en place, elle s'étend sensiblement parallèlement au fond 15 du socle 11.

Pour le reste, les dispositions sont sensiblement du même type que celles précédemment décrites.

De ce fait, sur la figure 10, les mêmes références désignent les mêmes éléments.

Toutefois, du côté opposé à la paroi longitudinale 32, les moyens d'engagement 33 comportent, pour coopération avec une console 55 qui fait saillie sur l'aile latérale 17A correspondante du socle 11, une languette 56, pour un encliquetage du type de celui intervenant entre la console 42 et la languette 26 du couvercle 14B du côté de cette paroi longitudinale 32.

## Revendications

1. Accessoire de passage (30) pour goulotte (10) comportant un socle (11) adapté à être appliqué à une quelconque paroi ou à un quelconque autre support, le volume intérieur de la goulotte (10) étant fragmenté en au moins deux compartiments (12A, 12B) séparés l'un de l'autre par au moins une cloison de compartimentage (13) appartenant au couvercle (14A) associé à un premier de ces compartiments (12A, 12B), cet accessoire de passage (30) étant **caractérisé en ce que**, destiné à venir localement en substitution au couvercle (14A) auquel appartient la cloison de compartimentage (13), il comporte, d'une part, au moins une paroi longitudinale (32), par laquelle il est apte à se substituer à cette cloison de compartimentage (13), et qui est ajourée par au moins un passage (31), et, d'autre part, des moyens d'engagement (33), qui s'étendent eux aussi longitudinalement, et par lesquels il est apte à être solidarisé au socle (11) de la goulotte (10).

2. Accessoire de passage (30) suivant la revendication 1, **caractérisé en ce que** les moyens d'engagement (33) interviennent au moins pour partie par encliquetage.

3. Accessoire de passage (30) suivant l'une quelconque des revendications 1, 2, **caractérisé en ce que** les moyens d'engagement (33) comportent au moins une languette (40), qui, disposée du côté de la paroi longitudinale (32), fait saillie par rapport à celle-ci.

4. Accessoire de passage (30) suivant la revendication 3, **caractérisé en ce que** la languette (40) fait saillie au dos de la paroi longitudinale (32).

5. Accessoire de passage (30) suivant l'une quelconque des revendications 1 à 4, **caractérisé en ce que** les moyens d'engagement (33) comportent au moins un crochet (41', 41"), qui, disposé à distance de la paroi longitudinale (32), s'étend en direction opposée à celle-ci.

6. Accessoire de passage (30) suivant l'une quelconque des revendications 1 à 5, **caractérisé en ce qu'**il comporte une paroi de façade (34), qui, à son raccordement avec la paroi longitudinale (32), forme globalement un dièdre avec celle-ci.

7. Accessoire de passage (30) suivant les revendications 5 et 6, prises conjointement, **caractérisé en ce que** le ou les crochets (41', 41") interviennent du côté de l'extrémité de la paroi de façade (34) opposée à la paroi longitudinale (32).

8. Accessoire de passage (30) suivant l'une quelconque des revendications 6, 7, **caractérisé en ce que** la paroi de façade (34) est à l'image du couvercle (14A) concerné.

9. Accessoire de passage (30) suivant la revendication 8, **caractérisé en ce que** la paroi de façade (34) est globalement cintrée.

10. Accessoire de passage (30) suivant la revendication 8, **caractérisé en ce que** la paroi de façade (34) est sensiblement droite.

11. Accessoire de passage (30) suivant l'une quelconque des revendications 1 à 10, **caractérisé en ce qu'**il comporte, à distance l'une de l'autre, deux parois transversales (36).

12. Accessoire de passage (30) suivant la revendication 11, **caractérisé en ce que** l'une au moins des parois transversales (36) présente au moins un passage (37).

13. Accessoire de passage (30) suivant la revendication 12, **caractérisé en ce que** le passage (37) d'une paroi transversale (36) est occulté par un opercule défonçable (38).

14. Accessoire de passage (30) suivant l'une quelconque des revendications 1 à 13, **caractérisé en ce que** le passage (31) de sa paroi longitudinale (32) ouvre sur le bord libre de celle-ci.

15. Accessoire de passage (30) suivant l'une quelconque des revendications 1 à 14, **caractérisé en ce qu'**il est apte à recevoir par encliquetage le couvercle (14B) associé au deuxième compartiment (12B).

16. Accessoire de passage (30) suivant la revendication 15, **caractérisé en ce qu'**il comporte, en saillie au dos de sa paroi longitudinale (32), une console (42) adaptée à coopérer en encliquetage avec une languette (26) du couvercle (14B).

17. Accessoire de passage (30) suivant l'une quelconque des revendications 1 à 16, **caractérisé en ce qu'**il est apte à recevoir un appareillage, à la manière d'un quelconque support.

18. Accessoire de passage (30) suivant les revendications 6 et 17, prises conjointement, **caractérisé en ce que** sa paroi de façade (34) présente un évidement (43) à la faveur duquel intervient un cadre (44).

19. Accessoire de passage (30) suivant l'une quelconque des revendications 1 à 18, **caractérisé en ce qu'**il est apte à recevoir par encliquetage une plaque de recouvrement (46).

20. Goulotte (10) du genre comportant un socle (11), dont le volume intérieur est fragmenté en au moins deux compartiments (12A, 12B) séparés l'un de l'autre par au moins une cloison de compartimentage (13), et deux couvercles (14A, 14B), qui sont associés, chacun respectivement, à ces deux compartiments (12A, 12B), et à l'un desquels appartient la cloison de compartimentage (13) correspondante, **caractérisée en ce qu'**elle comporte, dans le compartiment (12A) au couvercle (14A) duquel appartient la cloison de compartimentage (13), un accessoire de passage (30), selon l'une quelconque des revendications 1 à 19, qui est inséré entre deux tronçons (14'A, 14"A) successifs de ce couvercle (14A).

## Claims

1. Passage accessory (30) for a trunking (10) comprising a base (11) adapted to be applied to any wall or to any other support, the inner volume of the channel (10) being divided into at least two compartments (12A, 12B) separated from each other by at least one separating partition (13) belonging to the cover (14A) associated with a first of these compartments (12A, 12B), this passage accessory (30) being **characterized in that**, being intended to substitute locally for the cover (14A) to which the separating partition (13) belongs, it comprises, on the one hand, at least one longitudinal wall (32) by which it is suitable for substituting for this separating partition (13), and which is pierced by at least one passage (31) and, on the other hand, engagement means (33) which also extend longitudinally, and by which it is suitable for being fastened to the base (11) of the trunking (10).

2. Passage accessory (30) according to claim 1, **characterized in that** the engagement means (33) act at least partly by snap-locking.

3. Passage accessory (30) according to either one of claim 1 or 2, **characterized in that** the engagement means (33) comprise at least one tab (40) which, arranged on the side of the longitudinal wall (32), projects from the latter.

4. Passage accessory (30) according to claim 3, **characterized in that** the tab (40) projects from the back of the longitudinal wall (32).

5. Passage accessory (30) according to any one of claims 1 to 4, **characterized in that** the engagement means (33) comprise at least one hook (41', 41") which, arranged at a distance from the longitudinal wall (32) extends in the opposite direction to the latter.

6. Passage accessory (30) according to any one of claims 1 to 5, **characterized in that** it comprises a front wall (34), which, at its junction with the longitudinal wall (32), forms a dihedron with the latter overall.

7. Passage accessory (30) according to claims 5 and 6, taken together, **characterized in that** the hook or hooks (41', 41") act on the side of the end of the front wall (34) opposite the longitudinal wall (32).

8. Passage accessory (30) according to any one of claims 6 and 7, **characterized in that** the front wall (34) matches the cover (14A) concerned.

9. Passage accessory (30) according to claim 8, **characterized in that** the front wall (34) is curved overall.

10. Passage accessory (30) according to claim 8, **characterized in that** the front wall (34) is substantially straight.

11. Passage accessory (30) according to any one of claims 1 to 10, **characterized in that** it comprises two transverse walls (36) at a distance from each other.

12. Passage accessory (30) according to claim 11, **characterized in that** at least one of the transverse walls (36) has at least one passage (37).

13. Passage accessory (30) according to claim 12, **characterized in that** the passage (37) of a transverse wall (36) is closed by a knockout seal (38).

14. Passage accessory (30) according to any one of claims 1 to 13, **characterized in that** the passage (31) in its longitudinal wall (32) opens onto the free edge of the latter.

15. Passage accessory (30) according to any one of claims 1 to 14, **characterized in that** it is suitable for receiving the cover (14B) associated with the second compartment (12B) by snap-locking.

16. Passage accessory (30) according to claim 15, **characterized in that** it comprises, projecting from the back of its longitudinal wall (32), a bracket (42) suitable for cooperating with a tab (26) of the cover (14B) by snap-locking.

17. Passage accessory (30) according to any one of claims 1 to 16, **characterized in that** it is suitable for receiving an item of equipment, in the manner of any support.

18. Passage accessory (30) according to claims 6 and 17 taken together, **characterized in that** its front wall (34) has a recess (43) receiving a frame (44).

19. Passage accessory (30) according to any one of claims 1 to 18, **characterized in that** it is suitable for receiving a cover plate (46) by snap-locking

20. Trunking (10) of the kind comprising a base (11), the inner volume of which is divided into at least two compartments (12A, 12B) separated from each other by at least one separating partition (13) and two covers (14A, 14B) which are each respectively associated with these two compartments (12A, 12B), and to one of which the corresponding separating partition (13) belongs, **characterized in that** it comprises, in the compartment (12A) to the cover (14A) of which the separating partition (13)
belongs, a passage accessory (30) according to any one of claims 1 to 19, which is inserted between two successive sections (14'A, 14"A) of this cover (14A).

## Patentansprüche

1. Durchführungszubehör (30) für einen Kabelkanal (10) mit einem Sockel (11), der zur Anbringung an einer beliebigen Wand oder einem beliebigen anderen Träger geeignet ist, wobei der Innenraum des Kabelkanals (10) in wenigstens zwei Kammern (12A, 12B) unterteilt ist, die durch wenigstens eine Zwischenwand (13) voneinander getrennt sind, die dem Deckel (14A) zugehörig ist, der der ersten der Kammern (12A, 12B) zugeordnet ist,
wobei das Durchführungszubehör (30) **dadurch gekennzeichnet ist, dass** es, da lokal zum Ersatz des Deckels (14A) bestimmt, dem die Zwischenwand (13) zugehörig ist, einerseits wenigstens eine Längswand (32) umfasst, durch die es die Zwischenwand (13) zu ersetzen vermag und die mit wenigstens einem Durchlass (31) durchbrochen ist, und andererseits Eingriffsmittel (33) umfasst, die sich gleichfalls längs erstrecken und durch die es am Sockel (11) des Kabelkanals (10) befestigt zu werden vermag.

2. Durchführungszubehör (30) nach Anspruch 1,
**dadurch gekennzeichnet, dass** die Eingriffsmittel (33) wenigstens zum Teil durch Einrasten wirken.

3. Durchführungszubehör (30) nach einem der Ansprüche 1, 2,
**dadurch gekennzeichnet, dass** die Eingriffsmittel (33) wenigstens eine Lasche (40) aufweisen, die, an der Seite der Längswand (32) angeordnet, bezüglich dieser vorsteht.

4. Durchführungszubehör (30) nach Anspruch 3,
**dadurch gekennzeichnet, dass** die Lasche (40) an der Rückseite der Längswand (32) vorsteht.

5. Durchführungszubehör (30) nach einem der Ansprüche 1 bis 4,
**dadurch gekennzeichnet, dass** die Eingriffsmittel (33) wenigstens eine Klammer (41', 41") aufweisen, die sich, mit Abstand zur Längswand (32) angeordnet, in entgegengesetzter Richtung zu dieser erstreckt.

6. Durchführungszubehör (30) nach einem der Ansprüche 1 bis 5,
**dadurch gekennzeichnet, dass** es eine Stirnwand (34) umfasst, die an der Verbindung mit der Längswand (32) allgemein einen Flächenwinkel mit dieser bildet.

7. Durchführungszubehör (30) nach den Ansprüchen 5 und 6 in Verbindung miteinander,
**dadurch gekennzeichnet, dass** die Klammer bzw. Klammern (41', 41") an der Seite des der Längswand (32) entgegengesetzten Endes der Stirnwand (34) greifen.

8. Durchführungszubehör (30) nach einem der Ansprüche 6, 7,
**dadurch gekennzeichnet, dass** die Stirnwand (34) so wie der betreffende Deckel (14A) ausgebildet ist.

9. Durchführungszubehör (30) nach Anspruch 8,
**dadurch gekennzeichnet, dass** die Stirnwand (34) allgemein gewölbt ist.

10. Durchführungszubehör (30) nach Anspruch 8,
**dadurch gekennzeichnet, dass** die Stirnwand (34) im Wesentlichen gerade ist.

11. Durchführungszubehör (30) nach einem der Ansprüche 1 bis 10,
**dadurch gekennzeichnet, dass** es voneinander beabstandet zwei Querwände (36) umfasst.

12. Durchführungszubehör (30) nach Anspruch 11,
**dadurch gekennzeichnet, dass** wenigstens eine der Querwände (36) wenigstens einen Durchlass (37) aufweist.

13. Durchführungszubehör (30) nach Anspruch 12,
**dadurch gekennzeichnet, dass** der Durchlass (37) einer Querwand (36) durch einen ausbrechbaren Deckel (38) verdeckt ist.

14. Durchführungszubehör (30) nach einem der Ansprüche 1 bis 13,
**dadurch gekennzeichnet, dass** sich der Durchlass (31) seiner Längswand (32) an deren freiem Rand öffnet.

15. Durchführungszubehör (30) nach einem der Ansprüche 1 bis 14,
**dadurch gekennzeichnet, dass** es den der zweiten Kammer (12B) zugeordneten Deckel (14B) durch Einrasten aufzunehmen vermag.

16. Durchführungszubehör (30) nach Anspruch 15,
**dadurch gekennzeichnet, dass** es, an der Rückseite seiner Längswand (32) vorstehend, eine Konsole (42) umfasst, die mit einer Lasche (26) des Deckels (14B) durch Einrasten zusammenzuwirken vermag.

17. Durchführungszubehör (30) nach einem der Ansprüche 1 bis 16,
**dadurch gekennzeichnet, dass** es ein Installationsgerät in der Art eines beliebigen Trägers aufzunehmen vermag.

18. Durchführungszubehör (30) nach den Ansprüchen 6 und 17 in Verbindung miteinander,
**dadurch gekennzeichnet, dass** seine Stirnwand (34) eine Aussparung (43) aufweist, mittels derer ein Rahmen (44) zum Einsatz kommt.

19. Durchführungszubehör (30) nach einem der Ansprüche 1 bis 18,
**dadurch gekennzeichnet, dass** es eine Abdeckplatte (46) durch Einrasten aufzunehmen vermag.

20. Kabelkanal (10) in der Art mit einem Sockel (11), dessen Innenraum in wenigstens zwei Kammern (12A, 12B) unterteilt ist, die voneinander durch wenigstens eine Zwischenwand (13) getrennt sind, und mit zwei Deckeln (14A, 14B), die jeweils diesen beiden Kammern (12A, 12B) zugeordnet sind und zu einem von denen die entsprechende Zwischenwand (13) gehört,
**dadurch gekennzeichnet, dass** er in der Kammer (12A), zu deren Deckel (14A) die Zwischenwand (13) gehört, ein Durchführungszubehör (30) nach einem der Ansprüche 1 bis 19 umfasst, das zwischen zwei aufeinanderfolgende Abschnitte (14'A, 14"A) des Deckels (14A) eingefügt ist.
